# EUROPEAN PATENT APPLICATION

(11) **EP 2 835 567 A1**
(43) Date of publication of application: **11.02.2015**
(21) Application number: 14180242.1
(22) Date of filing: 07.08.2014
(51) Int. Cl.: F16L 13/02, F16L 27/047, F16L 27/06

(54) **Redundant seal assemblies for misaligned conduits**

(30) Priority: 08.08.2013 US 201361863643 P; 03.02.2014 US 201414170670
(71) Applicant: Hamilton Sundstrand Space Systems International, Inc., Windsor Locks, CT 06096 (US)
(72) Inventor: Zaffetti, Mark A., Suffield, CT Connecticut 06078 (US); Howe, Robert H., West Suffield, CT Connecticut 06093 (US); O'coin, James R., Somers, CT Connecticut 06071 (US)
(74) Representative: Hall, Matthew Benjamin

(57) **Abstract**

A seal assembly (10) for accommodating misaligned conduits includes a first conduit (100), a second conduit (200), and a cup member (300). The first conduit has a first end (102) and an opposed second end (104) with a core (106). The core includes a spherical portion includes two separate seals (400, 402) axially spaced apart from one another relative to a longitudinal axis (114) defined by the first conduit. An internal passage (108) extends through the first conduit from the first end to the second end. The second conduit (200) has opposed first (202) and second (204) ends. The first end of the second conduit defines a first socket portion (206) and an internal passage (208) extends through from the first end to the second end of the conduit. A cup member (300) defines a second socket portion (302), which together with the first socket portion, defines a socket (304) for sealably capturing the core spherical portion and accommodating axial misalignment of the first and second conduits.

## Description

The present disclosure relates to tube joints, and more particularly to tube joints seals for coupling misaligned tube end portions, for example in leak tight systems.

Metal tubing is used to convey fluids in vehicles systems. Typically, tube segments join one another at tube joints for purposes of placing vehicle components in fluid communication with one another. These tube segments are typically formed and cut to a predetermined length, connected to one end of a vehicle module, and coupled together at their ends in a welded joint or fitting.

Owing to any of a number of sources of variation, tube ends can be axially misaligned at the tube joint such that the axes of the opposing tube segments are oblique with respect to one another. In such circumstances, the tube segment ends are simply realigned by forcing the cantilevered tube ends into axial alignment for purposes of joining the tube ends - particularly when the angular misalignment is relatively small. Realigning tube segment ends this way can impose stress on the tubing wall in one or both of the tube joint and tube joints opposing the misaligned tube joint. This stress can fracture the tube wall. It can also weaken the tube wall such that, while it may pass an initial qualification test, it is more likely to fail during service. Additionally, this misalignment can cause the joint to leak, even when a seal is included as part of the assembly.

Conventional tube segment joining methods and devices have generally been considered satisfactory for their intended purpose. However, there is a need for improved tube joining methods and devices that can correct tube segment misalignment with less stress imposed on the tube wall and improved probability of creating a leak tight connection upon initial assembly. There is also a continuing need for tube segment joints that are easy to make and use. The present disclosure provides solutions to these needs.

A seal assembly for accommodating misaligned conduits includes a first conduit, a second conduit, and a cup member. The first conduit has a first and an opposed second end with a core defined on the second end. The core defines a spherical portion with two separate seals axially spaced apart from one another relative to a longitudinal axis defined by the first conduit. An internal passage extends through the first conduit from the first end to the second end. The second conduit has opposed first and second ends with a first socket portion defined on the first end. An internal passage extends between the first and second ends. The cup member defines a second socket portion that, in conjunction with the first socket portion of the second conduit, forms a socket. The core spherical portion is captured within the cup member with the seals in sealing engagement with the first socket portion. The core is free to move relative to the socket to accommodate axial misalignment in the first and second conduits.

In certain embodiments, the cup member defines a clearance bore extending axially from the second socket portion. The clearance bore can have a diameter that is greater than that of the first end of the first conduit to accommodate axial misalignment of the first conduit relative to the cup member. The cup member can define a limit on relative axial misalignment of the first conduit relative to the cup member.

In accordance with certain embodiments, the cup member is fixed relative to the second conduit. The cup member can define an axially aligned polygonal outer perimeter for engagement with a tool for rotating the cup member circumferentially on to the second conduit. The cup member can include an outer portion fixed outboard of the second socket portion. The second socket portion can be brazed to the cup member. It is also contemplated that the second socket portion can be threaded into the inner portion of the cup member.

In accordance with certain embodiments, each seal includes a seal channel defined circumferentially about the core spherical portion of the first conduit. Separate elastomeric seal rings can be disposed in each of the seal channels. The core spherical portion can be engaged within the first socket portion of the second conduit to form a ball and socket joint such that the seals are in sealing engagement with the first socket portion. The core can be free to move relative to the first socket portion to accommodate axial misalignment of the first and second conduits. Both seals can be positioned to be in sealing engagement with the first socket portion regardless of misalignment of the first conduit within the limit of the cup member.

These and other features of the systems and methods of the subject disclosure will become more readily apparent to those skilled in the art from the following detailed description of the preferred embodiments taken in conjunction with the drawings.

So that those skilled in the art to which the subject disclosure appertains will readily understand how to make and use the devices and methods of the subject disclosure without undue experimentation, preferred embodiments thereof will be described in detail herein below, by way of example only, and with reference to certain figures, wherein:
Fig. 1 is a cross-sectional side elevation view of an exemplary embodiment of a seal assembly constructed in accordance with the present disclosure, showing redundantly sealed misaligned first and second conduits;
Fig. 2A is a perspective view of the first conduit of Fig. 1, showing a core coupled on an end of the first conduit;
Fig. 2B is a cross-sectional side elevation view of the first conduit, showing seal channels with elastomeric seal rings seated in a spherical portion of the core;
Fig. 3A is a perspective view of the second conduit of Fig. 1, showing a first socket portion disposed on an end of the second conduit;
Fig. 3B is a cross-sectional side elevation view of the second conduit, showing the first socket portion internal geometry;
Fig. 4A is a perspective view of a cup member joining the first and second conduits of Fig. 1, showing an aperture for receiving the first and second conduits;
Fig. 4B is a cross-sectional side elevation view of the cup member, showing a second socket portion defined within an interior of the cup member; and
Fig. 5 is cross-sectional side elevation view of the cup member and second conduit coupled one another, showing a socket formed by the first socket portion and second socket portions of cup member and second conduit.

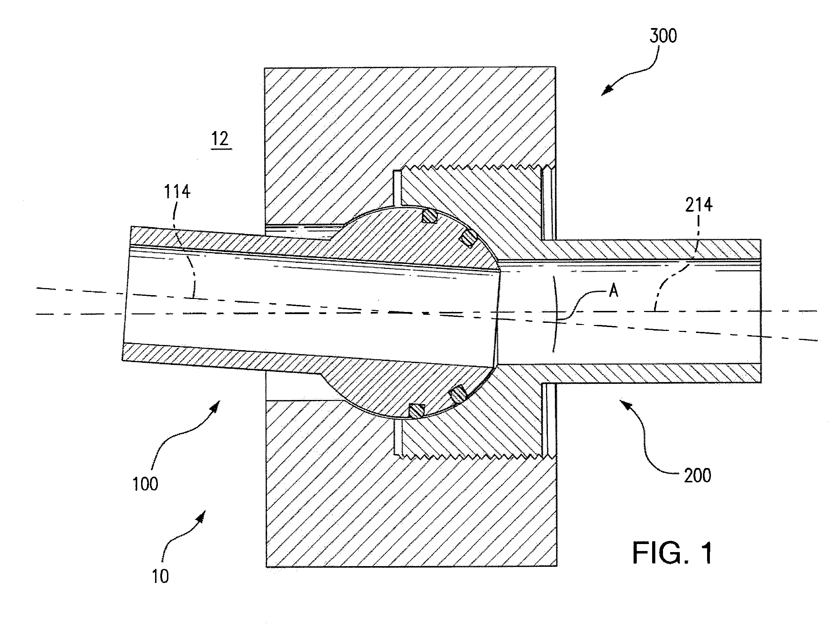

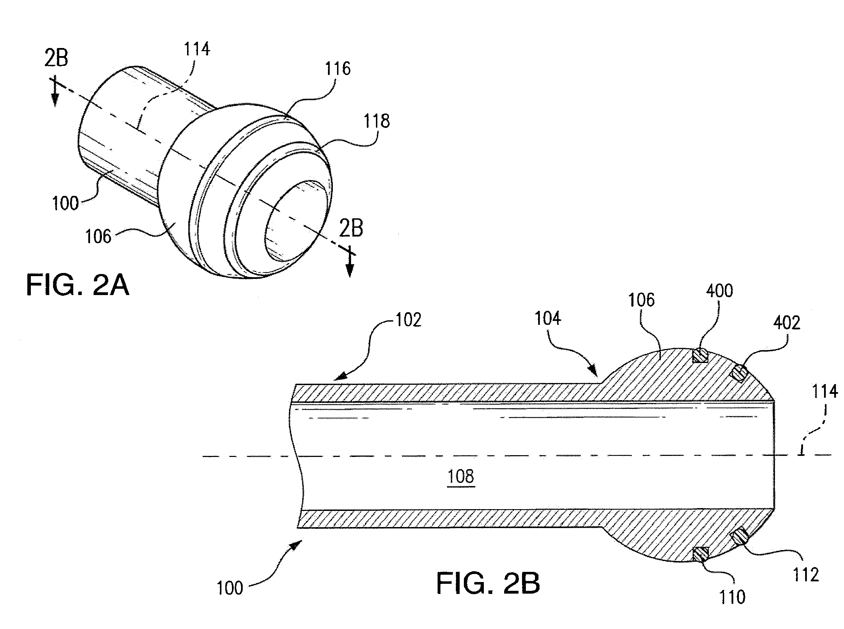

Reference will now be made to the drawings wherein like reference numerals identify similar structural features or aspects of the subject disclosure. For purposes of explanation and illustration, and not limitation, a partial view of an exemplary embodiment of a seal assembly in accordance with the disclosure is shown in Fig. 1 and is designated generally by reference character 10. Other embodiments of seal assemblies in accordance with the disclosure, or aspects thereof, are provided in Figs. 2-5, as will be described. The systems and methods described herein can be used for coupling conduit segments, such as tube segments conveying fluid in space vehicles for example.

Seal assembly 10 includes a first conduit 100, a second conduit 200, and a cup member 300. First conduit 100 defines a first longitudinal axis 114. Second conduit 200 defines a second longitudinal axis 214. First and second longitudinal axes 114 and 214 obliquely intersect one another with an angular misalignment represented by angle A. Cup member 300 couples first conduit 100 to second conduit 200 so as to render each fluidly communicative with the other and redundantly sealed with respect to an environment 12 external to seal assembly 10. As will be appreciated by those skilled in the art, first and second conduits 100 and 200 can be conduit segments coaxially coupled to respective tube segments (not shown for clarity purposes), the respective tube segments being misaligned to one another. First and second conduit segments can couple to respective tube segments with fittings, welds, or brazed joints for example.

As illustrated in Fig. 1, first conduit 100 has a core with a spherical portion defined on an end. Second conduit 200 and cup member 300 respectively define first and second socket portions that cooperatively form a socket. The core spherical portion is configured to include seal rings such that, when disposed within the socket, redundant seals are formed between the conduit interiors and the environment 12 external to seal assembly 10. The core can be ball-shaped, for example, simplifying manufacture. The first redundant seal includes a first channel defined in the surface of the core spherical portion, a first elastomeric seal ring partially disposed within the channel, and a corresponding portion of the surface defining the first socket portion of second conduit 200. The second redundant seal includes a second channel defined in the surface of the core spherical portion, a second elastomeric seal ring partially disposed within the second channel, and a corresponding portion of the surface defining the first socket portion of second conduit 200. The core of first conduit 100 is disposed between cup member 300 and second conduit 200 such that the first and second elastomeric seal rings are compressed between the opposed core spherical portion and first socket portion of second conduit 200. Compressing the elastomeric seal rings causes the rings to conform to geometries of the channel, adjacent the surface portion of the core, and opposing the surface portion of the first socket portion such that leakage paths across the seal assembly are occluded. Moreover, as two seals separate interior portions of conduits 100 and 200 from environment 12 external to seal assembly 10, seal assembly 10 provides redundant sealing between the conduit interiors and environment 12 external to seal assembly 10. As will be appreciated by those skilled in the art, more than two seals can be incorporated into seal assembly 10.

Referring to Fig. 2A and Fig. 2B, first conduit 100 is shown. First conduit 100 has a first end 102 and an opposed second end 104. Second end 104 has a core 106 defining a spherical surface portion, and in the illustrated embodiment core 106 is a ball defining a spherical surface portion and aperture. The aperture seats on the end of the conduit. In embodiments, core 106 is integral with first conduit 100. First conduit 100 may be integrally formed with core 106 such as by turning down a relatively thick walled tube segment to a relatively thinner wall thickness, thereby defining core 106 and the spherical surface portion of second end 104. It is also contemplated that first conduit 100 may be formed by coupling core 106 as an independently formed component to second end 104 of a tube segment, such as by welding or brazing for example. As will be appreciated by those skilled in art, other methods of forming the core and assembling the core with the conduit are possible.

With reference to Fig. 2A, the spherical surface portion of core 106 includes a first and a second seal channel 116 and 118 axially spaced apart from one another along and relative to first longitudinal axis 114. First seal channel 116 is separate from second seal channel 118, each extending parallel to one another within the outer surface of the spherical portion of core 106. As shown in Fig. 2B, an internal passage 108 extends axially through first conduit 100 between first end 102 and second end 104. First seal channel 116 has a first elastomeric seal ring 400 disposed therein, a portion of first elastomeric seal ring 400 below the surface of core 106 and a portion above the surface of the spherical portion of core 106. Second seal 118 has a second elastomeric seal ring 402 disposed therein, a portion elastomeric seal ring 402 being below a surface of core 106 and a portion above the surface of core 106. The diameter of the second elastomeric seal ring 402 is smaller than the diameter of the first elastomeric seal 400. One or both of first and second elastomeric seal rings 400 and 402 can be an o-ring conforming to AS568 specifications. AS568 defines o-ring geometry, material, and surface finish specification for corresponding interior surface portion of second conduit 200 for sealable engagement with first and second elastomeric seal rings 400 and 402. Incorporating AS568 o-rings simplifies manufacture of seal assembly 10. It also simplifies servicing such seal assemblies after fabrication as seals of standard size are generally readily available as spares.

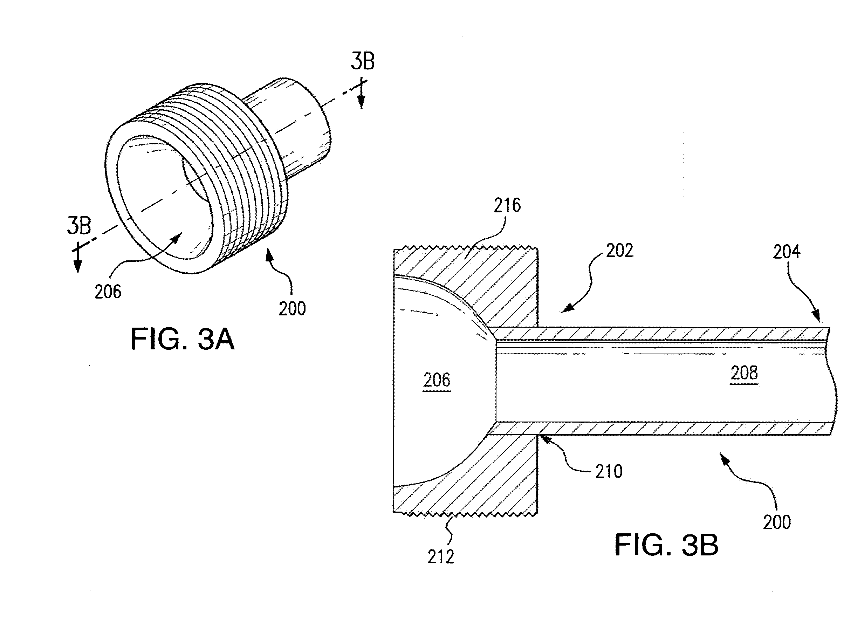

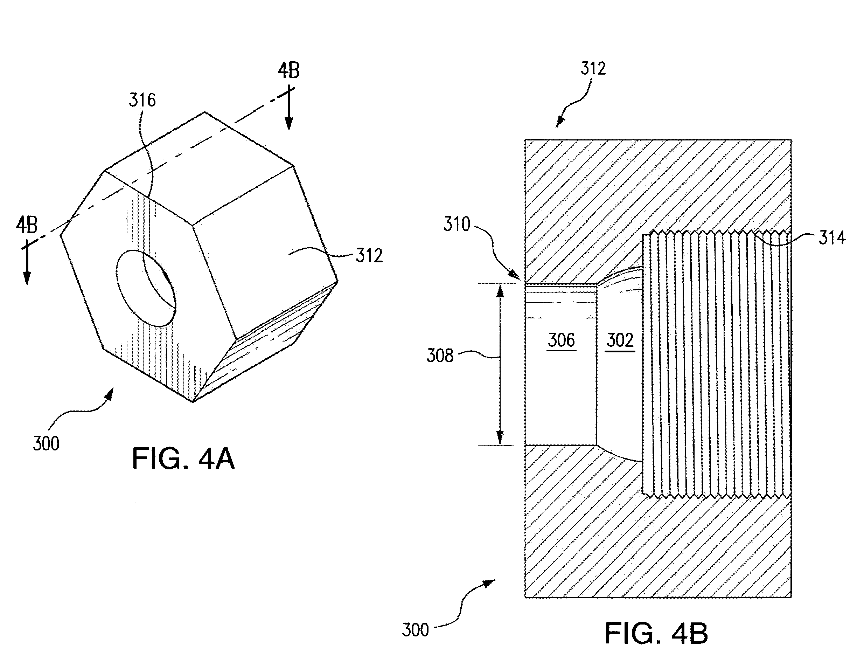

First and second seals extend circumferentially about core 106 including first and second seal channels 116 and 118 and first and second elastomeric seal rings 400 and 402. Core 106 of first conduit 100 engages with a socket portion 206 (shown in Fig. 3B) of second conduit 200 to form a ball and socket joint, shown in Fig. 1, the first and second seals being in sealing engagement with first socket portion 206. Core 106 is free to move relative to first socket portion 206 to accommodate axial misalignment of first and second conduits 100 and 200. The first and second seals can be positioned in sealing engagement with first socket portion 206 regardless of misalignment of first conduit 100 within certain mechanical limits, illustrated in Fig. 4B as described below.

With reference to Figs. 3A and 3B, second conduit 200 is shown. Second conduit 200 has opposed first and second ends 202 and 204. First end 202 of the second conduit 200 defines first socket portion 206 within a cupped body 216. Cupped body 216 defines a male-threaded segment 212 having male threads for threadably engaging cup member 300. An internal passage 208 extends therethrough from first end 202 to second end 204 of conduit 200 for fluidly coupling first socket portion 206 with misaligned tube segments. Cupped body 216 is integral with second conduit 200, and may be integrally formed with second conduit 200 such as by turning down a relatively thick-walled piece of stock to a thinner walled tube and defining cupped body 216 and first socket portion 206 therein. As will be appreciated by those skilled in the art, cupped body 216 may be formed as a separate component and attached to conduit 200, such as by brazing or welding for example.

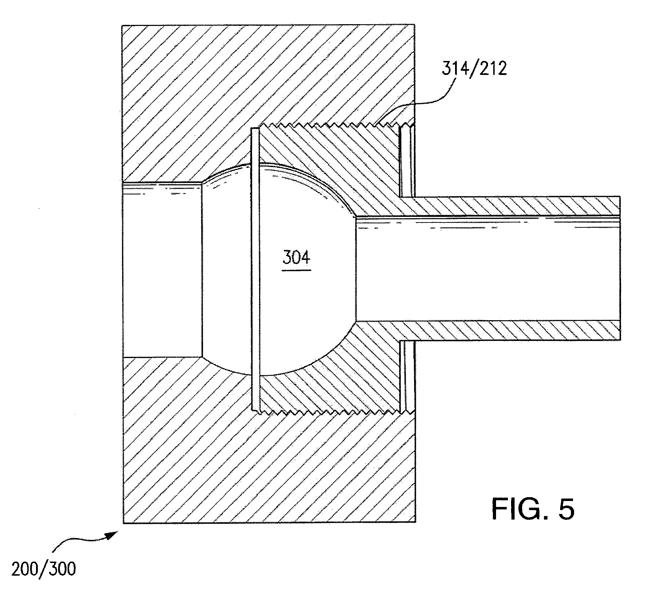

With reference to Figs. 4A and 4B, cup member 300 is shown. Cup member 300 defines a second socket portion 302. First socket portion 206 of cupped body 216 and second socket portion 302 of cup member 300 form a socket 304, shown in Fig. 5, for sealably capturing core 106 and accommodating axial misalignment of first and second conduits 100 and 200. An arcuate surface portion of cup member 300 defines second pocket portion 302. The surface is configured to compress elastomeric seal rings 400 and 402 between the surface and core 106, thereby forming first and second seals between core 106 and cupped body 216 in a range of conduit misalignment orientations. The surface may be polished or coated with a lubricant as specified in AS568, for example.

Cup member 300 defines a clearance bore 306 that extends axially away from second socket portion 302. Clearance bore 306 is open to environment 12 external to seal assembly 10 when first and second conduits 100 and 200 are coupled to cup member 300. Clearance bore 306 has a diameter 308 that is greater than that of first end 102 of first conduit 100 for accommodating axial misalignment of first conduit 100 relative to cup member 300. Cup member 300 also defines a limit 310 for restricting the relative axial misalignment of first conduit 100 with respect to second conduit 200. The extent of axial misalignment tolerable by seal assembly is a function of diameter 308, the outer diameter of first conduit 100, and distance of the arcuate surface within cupped body 216 from limit 310. Limit 310 is suitably positioned such that first and second seals remain in sealing engagement with first socket portion 206 over a range angular misalignment values.

Cup member 300 includes a female threaded segment 314. Female threaded segment 314 includes female threads that correspond to the male threads of male threaded segment 212. The threaded segment may include standard threads, such as half-inch or one-inch screw threads for example, simplifying manufacture and reducing cost of seal assembly 10. With reference to Fig. 4A, an outer portion 312 of cup member 300 defines an axially aligned polygonal outer perimeter 316 with surfaces configured for engagement with a tool, such as a wrench, for rotating the cup member circumferentially. This allows for assembly of seal assembly 10 by rotating cup member 300 relative to second conduit 200 to form first and second seals as described above.

Embodiments of the seal assemblies described above satisfy systems that require redundant seals at mating connections. Typically, redundant sealing is achieved through close alignment between mating parts with tight alignment tolerances. This entails relatively high manufacturing cost as achieving the alignment tolerance can require rework or additional assembly time. Embodiments of the seal assemblies described above are tolerant of misalignment and provide redundant sealing through a range of conduit misalignments. Embodiments of the seal assemblies include a core defining a spherical surface portion (e.g. a ball), an opposed cupped body, a cup member, and two elastomeric seal rings (a primary seal and a redundant seal) for coupling misaligned conduit segments using mating spherical surfaces defined by the core, cupped body, and cup member and grooves machined into the core spherical surface portion to accept the elastomeric seal rings. The cupped body end has an external thread that is received by the cup member. The cup member slides over at least a portion of the spherical portion of the core and threadably engages the cupped body. This brings the two mating spherical surfaces together, compresses the elastomeric seal rings, and creates redundant seals. A radial gap between the cup member and conduit coupled to the core end allows misalignment between the core on the first conduit and cupped body on the second conduit. This provides redundant sealing without requiring close alignment between mating parts which otherwise require tight tolerances and associated high manufacturing cost.

As described, embodiments of the seal assembly include two seals. As will be appreciated by those skilled in the art, the seal assembly can be constructed using a single seal to achieve sealing between the conduit interiors and the environment external to the conduits. As will also be appreciated, sealing (and redundant) can also be achieved with embodiments having two, three, or a greater number of seals.

In embodiments, seal assemblies described above tolerate conduit misalignment and maintain redundant sealing in space systems under operating pressures of greater than about 120 psi with leakage rates of less than about 0.00001 scc/sec of helium or oxygen. This safeguards limited supplies of gases aboard spacecraft the loss of which could jeopardize the vehicle mission or jeopardize the well-being of crew aboard the spacecraft.

The methods and systems of the present disclosure, as described above and shown in the drawings, provide for redundant sealing of misaligned conduits with superior properties including tolerance for misalignment without having to realign misaligned conduit segments or requiring tight tolerances. While the apparatus and methods of the subject disclosure have been shown and described with reference to preferred embodiments, those skilled in the art will readily appreciate that changes and/or modifications may be made thereto without departing from the scope of the subject disclosure as defined by the appended claims.

The following clauses set out features of the invention which may not presently be claimed in this application but which may form the basis for future amendment or a divisional application:
1. A seal assembly for accommodating misaligned conduits comprising:
   a first conduit including a first end and an opposed second end with a core defined at the second end, wherein an internal passage is defined through the first conduit from the first end to the second end, and wherein the core has a spherical portion including two separate seals axially spaced apart from one another relative to a longitudinal axis defined by the first conduit;
   a second conduit including opposed first and second ends, wherein the first end of the second conduit defines a first socket portion, wherein an internal passage is defined through the second conduit from the first end to the second end thereof; and
   a cup member defining a second socket portion, wherein the first and second socket portions define a socket, wherein the core spherical portion of the first conduit is captured within the socket with the seals in sealing engagement with the socket, wherein the core is free to move relative to the socket to accommodate axial misalignment of the first and second conduits, wherein each seal includes a seal channel defined circumferentially around the core spherical portion and a separate elastomeric seal ring is disposed in each of the seal channels, wherein the cup member defines a clearance bore extending axially from the second socket portion, wherein the clearance bore has a diameter that is greater than that of the first end of the first conduit to accommodate axial misalignment of the first conduit relative to the cup member, wherein the cup member defines a limit on relative axial misalignment of the first conduit relative to the cup member, and both seals are positioned to be in sealing engagement with the first socket portion regardless of misalignment of the first conduit within the limit.
2. A seal assembly as recited in clause 1, wherein the cup member is fixed relative to the second conduit once threaded into the cup member to sealably engage the first conduit.
3. A seal assembly as recited in clause 1, wherein the cup member includes an outer portion fixed outboard of the second socket portion.
4. A seal assembly as recited in clause 1, wherein the cup body is brazed into the cup member.
5. A seal assembly as recited in clause 1, wherein an outer periphery of the first socket portion is threaded into the cup member.

## Claims

1. A seal assembly for accommodating misaligned conduits comprising:
a first conduit (100) including a first end (102) and an opposed second end (104) with a core (106) defined at the second end, wherein an internal passage (108) is defined through the first conduit from the first end to the second end, and wherein the core has a spherical portion including two separate seals (400, 402) axially spaced apart from one another relative to a longitudinal axis (114) defined by the first conduit;
a second conduit (200) including opposed first (202) and second (204) ends, wherein the first end of the second conduit defines a first socket portion (206), wherein an internal passage (208) is defined through the second conduit from the first end to the second end thereof; and
a cup member (300) defining a second socket portion (302), wherein the first and second socket portions define a socket (304), wherein the core spherical portion is captured within the socket with the seals in sealing engagement with the socket, wherein the core is free to move relative to the socket to accommodate axial misalignment of the first and second conduits.

2. A seal assembly as recited in claim 1, wherein each seal (400, 402) includes a seal channel (116, 118) defined circumferentially around the spherical portion of the core (106).

3. A seal assembly as recited in claim 2, wherein a separate elastomeric seal ring (400, 402) is disposed in each of the seal channels (116, 118).

4. A seal assembly as recited in claim 1, 2 or 3, wherein the cup member (300) defines a clearance bore (306) extending axially from the second socket portion (302), wherein the clearance bore has a diameter (308) that is greater than that of the first end (102) of the first conduit (100) to accommodate axial misalignment of the first conduit relative to the cup member.

5. A seal assembly as recited in any preceding claim, wherein the cup member (300) defines a limit (310) on relative axial misalignment of the first conduit (100) relative to the cup member.

6. A seal assembly as recited in claim 5, wherein both seals (400, 402) are positioned to be in sealing engagement with the first socket portion (206) regardless of misalignment of the first conduit (100) within the limit (310).

7. A seal assembly as recited in any preceding claim, wherein the cup member (300) couples to the first conduit (100) by threadably coupling with the second conduit (200).

8. A seal assembly as recited in any preceding claim, wherein the cup member (300) includes an outer portion (312) fixed outboard of the first socket portion (206).

9. A seal assembly as recited in any preceding claim, wherein the cup body (216) is brazed to the cup member (300).

10. A seal assembly as recited in any preceding claim, wherein an outer periphery of the first socket portion (206) is threaded into the cup member (300).

11. A seal assembly as recited in any preceding claim, wherein the cup member (300) defines an axially aligned polygonal outer perimeter (316) for engagement with a tool for rotating the cup member circumferentially.

12. A seal assembly for accommodating misaligned conduits comprising:
a first conduit (100) including a first end (102) and an opposed second end (104) with a core (106) defined at the second end, wherein an internal passage (108) is defined through the first conduit from the first end to the second end, and wherein the core defines a spherical portion including two separate seals (400, 402) axially spaced apart from one another relative to a longitudinal axis (114) defined by the first conduit; and
a second conduit (200) including opposed first (202) and second (204) ends, wherein the first end of the second conduit defines a socket portion (206), wherein an internal passage (208) is defined through the second conduit from the first end to the second end thereof, wherein the core spherical portion of the first conduit is engaged with the socket portion of the second conduit to form a ball and socket joint with the seals in sealing engagement with the socket portion, wherein the core is free to move relative to the socket portion to accommodate axial misalignment of the first and second conduits.

13. A seal assembly as recited in claim 12, wherein each seal (400, 402) includes a seal channel (116, 118) defined circumferentially around the core (106) spherical portion.

14. A seal assembly as recited in claim 13, wherein a separate elastomeric seal ring (400, 402) is disposed in each of the seal channels (116, 118).

15. A seal assembly as recited in claim 12, 13 or 14, wherein both seals (400, 402) are positioned to be in sealing engagement with the socket portion (206) regardless of misalignment of the first conduit (100) within a limit (310).
